# EUROPEAN PATENT SPECIFICATION

(11) **EP 3 066 351 B1**
(45) Date of publication and mention of the grant of the patent: **17.04.2019**
(21) Application number: 13798787.1
(22) Date of filing: 06.11.2013
(51) Int. Cl.: F16C 11/06, B61G 5/02, F16C 11/10

(54) **BEARING WITH ANCHOR MEMBER**
LAGER MIT EINEM VERANKERUNGSELEMENT
PALIER AVEC ÉLÉMENT D'ANCRAGE

(43) Date of publication of application: 14.09.2016
(73) Proprietor: Roller Bearing Company of America, Inc., Oxford, CT 06478 (US); Charmillot, Phillippe, 2832 Rebeuvelier (CH); Verniquet, Pierre, 68580 Seppois-le-Bas (FR)
(72) Inventor: Charmillot, Phillippe, 2832 Rebeuvelier (CH); Verniquet, Pierre, 68580 Seppois-le-Bas (FR)
(74) Representative: Bjerkéns Patentbyrå KB (Stockholm)
(86) International application number: PCT/US2013/068743
(87) International publication number: WO 2015/069237

(56) References cited:
- AU-A- 8 035 782
- DE-A1- 2 030 481
- DE-U1- 29 603 375
- FR-A1- 2 577 589
- GB-A- 2 424 456
- US-A- 4 555 033

## Description

### FIELD OF THE INVENTION

The present invention relates generally to a bearing and is more particularly directed to a bearing for a rail car coupling according to the preamble of claim 1. The bearing has arcuate bearing surfaces and an anchor member for restraining axial movement.

### BACKGROUND OF THE INVENTION

A train of rail cars typically includes multiple rail cars coupled to one another via a rail car coupling. Rail car couplings generally include a bearing that connects a first coupling linkage attached to the rear of a leading rail car to a second coupling linkage attached to the front of a trailing rail car. The bearing includes an inner member moveably positioned in an outer member. The inner member may be secured to either of the first coupling linkage or the second coupling linkage. The outer member may be secured to the other of the first coupling linkage or the second coupling linkage.

Prior art bearings have been unable to adapt to various track and rail conditions. For example, prior art bearings have been unable to adequately operate as the train of rail cars travels around a left or right hand turn, when the train of rail cars travels up or down a slope, and when the train travels on a banked track. In addition, the bearing transmits loads between the inner member and the outer member in response to pulling or pushing of adjacent rail cars which can create vertically upward force components that can cause the inner member to dislodge from the outer member.

GB-2 424 456 A discloses a thrust bearing arrangement comprising a bearing member and a housing, the bearing member having an inner and outer bearing surface for engaging respectively with an inner and outer counter-surface associated with the housing so as to allow relative rotation of the bearing member and the housing about a central axis. The arrangement is further being provided with a self-adjustment means to reduce and thereby adjust the axial separation of the counter-surfaces so as to urge the counter-surfaces into engagement with the respective bearing surfaces as progressive wear occurs between the bearing surfaces and counter surfaces. The arrangement is of use in couplings between carriages of trains, trams, buses etc.

DE-2 030 481 A discloses a bearing for a rail car coupling according to the preamble of claim 1, the bearing comprising an outer member and an inner member. The outer member has a base portion and a first concave surface extending from a first axial end of the base portion. The base portion has a first convex surface extending from a second axial end of the base portion. The base portion and the first concave surface cooperate to define a cavity in the outer member. The base portion has a first aperture extending therethrough. The inner member has a second convex surface and is positioned in the cavity such that the second convex surface slidingly engages the first concave surface. The inner member has a second aperture extending therethrough. An anchor member is defined by a shaft and a head extending radially outward from a first end of the shaft. A second end of the shaft extends through the first aperture and is removably secured in the second aperture. The head has a second concave surface facing the second end of the shaft. The second concave surface slidingly engages the first convex surface to restrain axial movement of the inner member relative to the outer member.

### SUMMARY

The bearing of the present invention is characterized by the characterizing features of claim 1. According to aspects illustrated herein there is disclosed a bearing that includes an outer member having a base portion and a first concave surface. The base portion has a first convex surface extending from a second axial end thereof. The base portion and the first concave surface cooperate to define a cavity in the outer member. The base portion has a first aperture extending therethrough. The bearing includes an inner member having a second convex surface and is positioned partially in the cavity such that the second convex surface slidingly engages the first concave surface. The inner member has a second aperture extending therethrough. The bearing includes an anchor member defined by a shaft and a head extending radially outward from the shaft. A portion of the shaft extends through the first aperture and is removably secured in the second aperture. The head has a second concave surface that slidingly engages the first convex surface.

The anchor member has operational and safety utility in catastrophic failure situations in which portions (e.g., peripheral components) of the bearing fail, the inner member and the outer member will not separate. During operation, the anchor member holds the bearing together in response to a vertically upward component of loads transmitted through the bearing.

### DESCRIPTION OF THE DRAWINGS

FIG. 1 is a side cross sectional view of a bearing of the present invention;
FIG. 2 is a side cross sectional view of the bearing of FIG. 1 having a self-lubricating liner disposed therein;
FIG. 3 is a side cross sectional view of the bearing of FIG. 1 shown with the inner member tilted relative to a central axis and shown without a sealing member;
FIG. 4 is a side cross sectional view of the bearing of FIG. 1 installed in a rail car coupling; and
FIG. 5 is a top view of the bearing of FIG. 1.

### DETAILED DESCRIPTION OF THE INVENTION

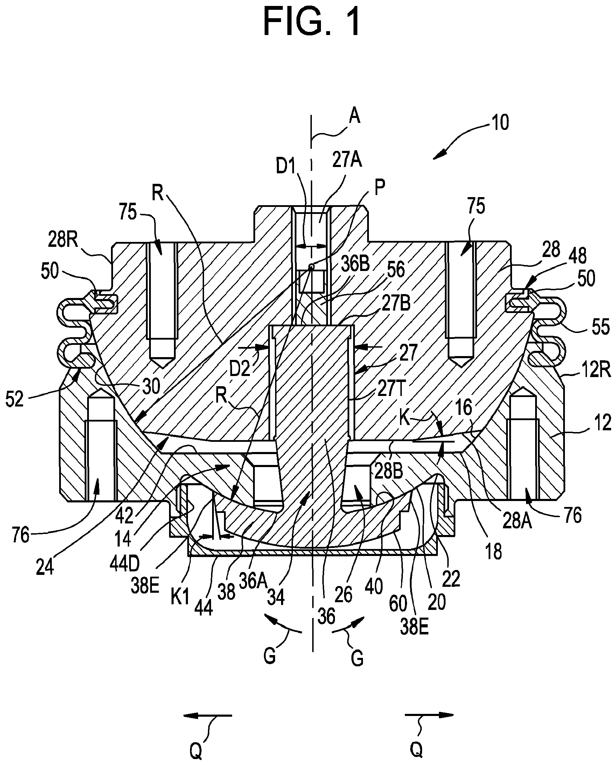

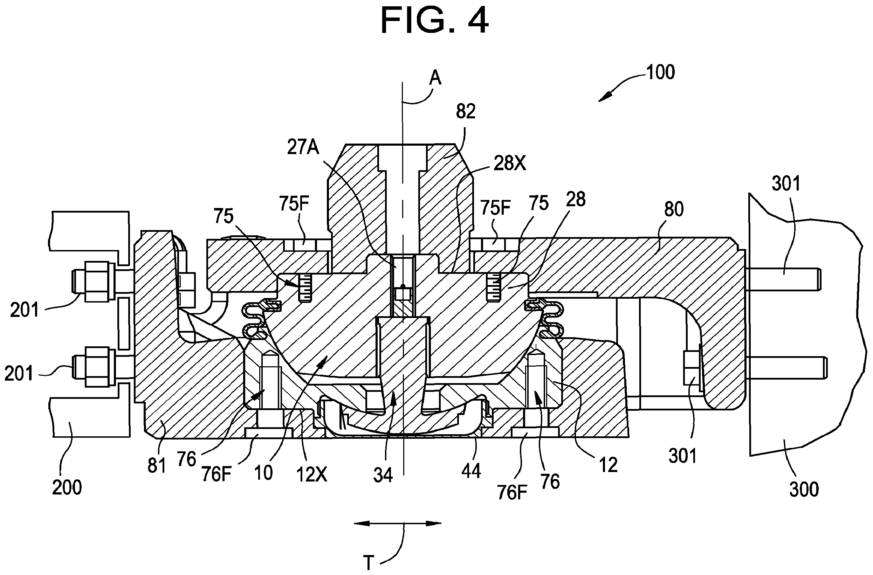

Referring to FIG. 1, a spherical bearing for a rail car coupling is generally designated by the numeral 10. As illustrated in FIG. 4, the bearing 10 is disposed in a rail car coupling assembly 100. As shown in FIG. 4, the bearing 10 is clamped between a first coupling member 80 and a second coupling member 81. The first coupling member 80 is secured to a portion of a leading rail car 300 by fasteners 301. The second coupling member 81 is secured to a portion of a trailing rail car 200 by fasteners 201. The bearing 10, first coupling member 80 and the second coupling member 81 cooperate to pivotally couple the leading rail car 300 and the trailing rail car 200 to one another in a train of rail cars.

As described further herein, the bearing 10 is configured to carry loads and allow misalignment in multiple directions as the train of rail cars travels along a track (not shown) in the directions indicated by the arrow T. The track includes two rails (not shown) spaced equally apart from one another. The two rails each have a load bearing surface that is spaced apart from a foundation by a predetermined height. In one embodiment, the two rails include portions which are spaced apart from the foundation by different heights such as occurs with banked tracks. The rails are laid out in a path that includes left and right hand curves and inclined slopes. The bearing 10 is configured to misalign as the train of rail cars travels through the left and right hand curves, inclined slopes, sections of the track having rails with different heights and combinations thereof.

The bearing 10 has an outer member 12 having a base portion 14 and a first concave surface 16 extending outwardly and upwardly from a first axial end 18 of the base portion 14. The base portion 14 has a first convex surface 20 extending inwardly and downwardly from a second axial end 22 of the base portion 14. The base portion 14 and the first concave surface 16 cooperate to define a cavity 24 in the outer member 12. The base portion 14 has a first aperture 26 extending therethrough. The bearing 10 includes an inner member 28 having a second convex surface 30. The inner member 28 and the outer member 12 are concentric with a central axis A. The inner member 28 is rotatably mounted with respect to the outer member 12 so that the inner member 28 and the outer member 12 are rotatably relative to one another. A portion of the inner member 28 is positioned in the cavity 24 such that the second convex surface 30 slidingly engages the first concave surface 16.

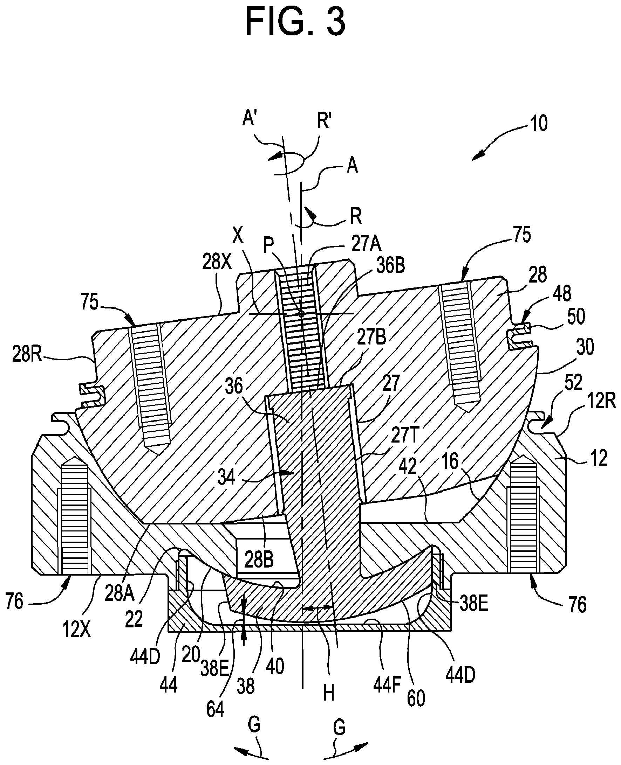

The inner member 28 has a second aperture 27 extending therethrough. The bearing 10 includes an anchor member 34 defined by a shaft 36 and a head 38 extending radially outward (from the central axis A in the direction indicated by the arrows Q) from a first end 36A of the shaft. A second end 36B of the shaft 36 extends through the first aperture 26 and is removably secured in the second aperture 27, for example by a threaded connection 27T. The head 38 has a second concave surface 40 facing the second end 36B of the shaft 36. The bearing 10 supports downward and reverse pullout loads along the central axis A and tilted axis A' as shown in FIG. 3. In particular, the second concave surface 40 slidingly engages the first convex surface 20 to restrain axial movement of the inner member 28 relative to the outer member 12 along the central vertical axis A or the tilted axis A'. During operation, the anchor member 34 holds the bearing 10 together in response to a vertically upward component of loads transmitted through the bearing 10 (e.g., between the inner member 28 and the outer member 12).

As shown in FIG. 1, the base portion 14 defines an axial facing first abutment surface 42 extending between the first concave surface 16 and the first aperture 26. The inner member 28 defines second abutment surface 28A extending between the second convex surface 30 and the second aperture 27. The first abutment surface 42 and the second abutment surface 28A engage one another when an angular range (e.g., angle H, as shown in FIG. 3) of misalignment (indicated by the arrows G) of the inner member 28 relative to the outer member 12 is at a maximum.

As shown in FIG. 3, the angle H depicts a misalignment of the inner member 28 relative to the outer member 12 so that the inner member 28 tilts relative to the vertical axis A, as indicated by the tilted axis A'. In one embodiment, the misalignment indicated by the arrows G is oriented in a plane that is coincident with a direction of travel T of the train of rail cars. Such misalignment in the form of axial tilting of the inner member 28 relative to the outer member 12 occurs, for example, as the train of rail cars travels up or down an inclined slope. When the train of rail cars travels up or down the inclined slope, the bearing 10 allows a front to back misalignment of the first coupling linkage with respect to the second coupling linkage by allowing the inner member to pivot or tilt relative to the outer member in the plane coincident with the direction of travel T.

The bearing 10 is also configured to traversely misalign in one or more planes traverse to the plane that is coincident with the direction of travel T, for example perpendicular to the direction of travel. Such traverse misalignment of the inner member 28 relative to the outer member 12 occurs, for example, as the train of rail cars travels over banked portions of the track where each of the rails has a different height.

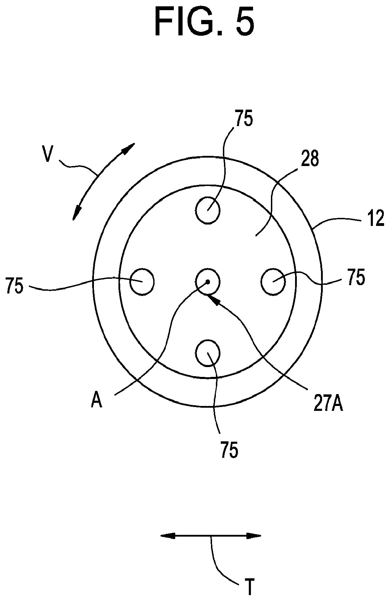

In addition, the bearing 10 is configured for rotational misalignment of the outer member 12 relative to the inner member 28 in the direction indicated by the arrow V, as illustrated in FIG. 5. Such rotational misalignment occurs, for example, when the train of rail cars travels through a left or right hand curve.

The bearing 10 is configured to accommodate the misalignment indicated by the arrows G that is oriented in the plane that is coincident with the direction of travel T of the train of rail cars, the traverse misalignment and the rotational misalignment, concurrently.

In one embodiment, the maximum magnitude of the angle H is 7 degrees in any direction from the central axis A (as shown in FIG. 3) to the tilted axis A'. The first convex surface 20, the first concave surface 16, the second convex surface 30 and the second concave surface 40 have a common radius of curvature R originating from a common point P of rotation, as shown in FIG. 1. While the angle H is described as being 7 degrees, the present invention is not limited in this regard as any angle may be employed including but not limited to less than 7 degrees (e.g., 4, 5, 6 or less degrees) or greater than 7 degrees (e.g., 8, 9, 10, 11, 12 or more degrees).

As illustrated in FIG.1, the second abutment surface 28A tapers axially away from a flat bottom portion 28B at an angle K to provide a full line of engagement along the second abutment surface 28A and the first abutment surface 42, when the angular range of misalignment is at the maximum as illustrated in FIG. 3. In addition, the taper of the abutment surface 28A allows for a greater angular range of misalignment than an inner member with an entirely flat bottom. In one embodiment, the angle K is about equal to the angle H.

Referring to FIGS. 1 and 3, the head 38 has a peripheral edge 38E, shown, for example, as a tapered circumference around the head 38. A cover 44 is removably positioned on the outer member 12 proximate the second axial end 22 of the base portion 14, for example, by threadable engagement. The head 38 is positioned between the cover 44 and the first convex surface 20. The outer member 12 has a third abutment surface 44D defined by a radially inward facing portion of the cover 44. The peripheral edge 38E engages the third abutment surface 44D when an angular range of misalignment of the inner member 28 relative to the outer member 12 is at a maximum. The peripheral edge 38E is tapered at an angle K1 relative to the central axis A to provide a full line of engagement along the third abutment surface 44D and the peripheral edge 38E, when the angular range of misalignment is at the maximum as illustrated in FIG. 3. In addition, the taper angle K1 of the peripheral edge 38A allows for a greater angular range of misalignment of the head 38 than a head with a peripheral edge without a taper. In one embodiment, the angle K1 is about equal to the angle H. In one embodiment, the head 38 has a third convex outer surface 60 configured to maintain a clearance G4 between the third convex surface 60 and an inward facing surface 44F of the cover 44 when the anchor member 34 moves from a central position to a maximum angular displacement, as shown in FIG. 3.

As illustrated in FIG. 1, the shaft 36 is adjustably secured in the first aperture 27 at a predetermined torque to create a predetermined friction force between the anchor member 34 and the outer member 12 and between the inner member 28 and the outer member 12. For example, the shaft 36 is threaded into a female threaded portion 27T of the first aperture 27. In one embodiment, the first aperture 27 has a female threaded bore 27 of a diameter D2 and transitions at a shoulder 27B, to a smaller threaded bore 27A having a diameter D1. In one embodiment, the second end 36B of the shaft 36 abuts the shoulder 27B. In one embodiment, a locking device, for example a set screw 56 is removably threaded into the smaller threaded bore 27A and is torqued and seated against the second end 36B of the shaft 36, for locking the anchor member 34 in a predetermined position.

As shown in FIGS. 1 and 3, the inner member 28 has a groove 48 formed circumferentially around the inner member between a radially outer surface 28R and the first convex surface 30. A retaining clip 50 is disposed in the groove 48. Another groove 52 is formed in a radially outer surface 12R of the outer member 12. An annular seal 55 has one end positioned in the retaining clip 50 and another end thereof positioned in the groove 52. The seal 55 is an accordion type and made from an elastomeric material that stretches and contracts in response to movement of the inner member 28 relative to the outer member 12.

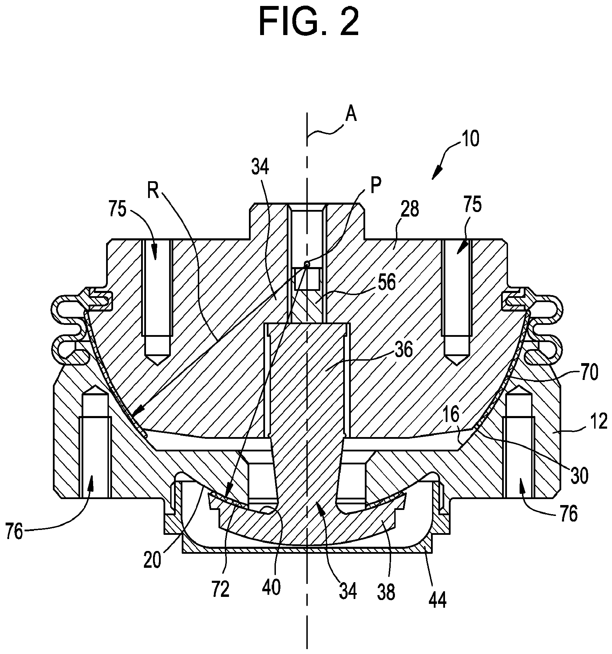

Referring to FIG. 2, a first lubricious liner 70 is disposed between the first concave surface 16 of the outer member 12 and the second convex surface 30 of the inner member 28. In one embodiment, a second lubricious liner 72 is disposed between the first convex surface 20 of the base portion 14 and the second concave portion 40 of the head 38 of the anchor member 34. In one embodiment, the first and second lubricious liners 70 and 72 are manufactured from self-lubricated materials and liners, such as but not limited to polytetrafluoroethylene (PTFE) materials (e.g., Uniflon-E manufactured by Uniflon Fluoromasters of Brazil) and liner systems with resins including, phenolic resins, polymid resins and polymid resins in conjunction with fiber weaves, fabrics or matrix materials, including but not limited to polyester, meta-aramids (e.g., NOMEX), PTFE and glass. In one embodiment, the self-lubricated material and liners are a homogeneous entity or are a molded nearly homogenous system without a weave, fabric or matrix and are manufactured from one or more acrylates.

In one embodiment, the first lubricious liner 70 is secured to the first concave surface 16. In one embodiment, the first lubricious liner 70 is secured to the second convex surface 30. In one embodiment, the first lubricious liner 70 is floating between the second convex surface 30 and the first concave surface 16.

In one embodiment, the second lubricious liner 72 is secured to the first convex surface 20. In one embodiment, the second lubricious liner 70 is secured to the second concave portion 40. In one embodiment, the second lubricious liner 70 is floating between the s second concave portion 40 and the first convex surface 20.

While the first and second lubricious liners 70 and 72 have been shown and described, the present invention is not limited in this regard as in one embodiment the first and second lubricious liners 70, 72 are not used and instead a lubricant such as grease may be disposed between the first concave surface 16 of the outer member 12 and the second convex surface 30 of the inner member 28; and/or between the first convex surface 20 of the base portion 14 and the second concave portion 40 of the head 38 of the anchor member 34.

Referring to FIGS. 1-3, the inner member 28 has a plurality (only two shown in the cross sectional view of FIGS. 1-3 and four shown in FIG. 5) of threaded bores 75 extending into an axially outward facing surface 28X of the inner member 28 for receiving threaded fasteners (75F shown in FIG. 4) therein for securing the inner member 28 to a portion of a rail car coupling as described herein with reference to FIG. 4. The outer member 12 has a plurality (only two shown in the cross sectional view) of threaded bores 76 extending into an axially outward facing surface 12X of the outer member 12 for receiving threaded fasteners (76F shown in FIG. 4) therein for securing the inner member to a portion of a rail car coupling, as described herein with reference to FIG. 4.

As illustrated in FIG. 4, the bearing 10 is disposed in a rail car coupling assembly 100. The bearing 10 is clamped between a first coupling member 80 and a second coupling member 81. The first coupling member 80 is secured to the axially outward facing surface 28X of the inner member 28 with suitable fasteners 75F threaded into the threaded bores 75. A mounting cap 82 is used as centering device during assembly of the rail car coupling assembly 100. The mounting cap 82 is temporally secured to the axially outward facing surface 28X of the inner member 28 with a suitable fastener threaded into the smaller threaded bore 27A and later removed after assembly. The second coupling member 81 is secured to the axially outward facing surface 12X of the outer member 12 with suitable fasteners 76F threaded into the treaded bores 76.

While the present disclosure has been described with reference to various exemplary embodiments, the invention is not limited to the particular embodiment disclosed as the best mode contemplated for carrying out this invention, but is defined by the appended claims only.

## Claims

1. A bearing (10) for a rail car coupling, the bearing comprising:
an outer member (12) having a base portion (14) and a first concave surface (16) extending from a first axial end (18) of the base portion (14), the base portion (14) having a first convex surface (20) extending from a second axial end (22) of the base portion (14), the base portion (14) and the first concave surface (16) cooperating to define a cavity (24) in the outer member (12), the base portion (14) having a first aperture (26) extending therethrough;
an inner member (28) having a second convex surface (30), the inner member (28) being positioned at least partially in the cavity (24) such that the second convex surface (30) slidingly engages the first concave surface (16), the inner member (28) having a second aperture (27) extending therethrough; and
an anchor member (34)defined by a shaft (36) and a head (38) extending radially outward from a first end (36A) of the shaft (36), a second end (36B) of the shaft (36) extending through the first aperture (26) and being removably secured in the second aperture (27), the head (38) having a second concave surface (40) facing the second end (36B) of the shaft (36), the second concave surface (40) slidingly engaging the first convex surface (20) to restrain axial movement of the inner member (28) relative to the outer member (12), **characterized in that**
the base portion (14) defines an axial facing first abutment surface (42) extending between the first concave surface (16) and the first aperture (27);
the inner member (28) defines second abutment surface (28A) extending between the second convex surface (30) and the second aperture (27); and
the first abutment surface (42) and the second abutment surface (28A) engage one another when an angular range of misalignment of the inner member (28) relative to the outer member (12) is at a maximum.

2. The bearing (10) of claim 1, wherein:
the head (38) has a peripheral edge (38E);
the outer member (12) comprises a third abutment surface (44D); and
the peripheral edge (38E) engages the third abutment surface (44D) when an angular range of misalignment of the inner member (28) relative to the outer member (12) is at a maximum.

3. The bearing (10) of claim 1, wherein the shaft (36) is adjustably secured in the second aperture (27) at a predetermined torque.

4. The bearing (10) of claim 1, wherein the shaft (36) is threaded into the second aperture (27).

5. The bearing (10) of claim 1, further comprising a lubricious liner (70, 72) disposed between at least one of:
the second convex surface (30) and the first concave surface (16); and
the first convex surface (20) and the second concave surface (40).

6. The bearing (10) of claim 1, further comprising a seal (55) extending between the outer member (12) and the inner member (28).

7. The bearing (10) of claim 1, wherein the inner member (28) has a plurality of threaded bores (75) extending into an axially outward facing surface (28X) thereof for receiving threaded fasteners (75F) therein for securing the inner member (28) to a portion of a rail car coupling.

8. The bearing (10) of claim 1, wherein the outer member (12) has a plurality of threaded bores (76) extending into an axially outward facing surface (12X) thereof for receiving threaded fasteners (76F) therein for securing the outer member (12) to a portion of a rail car coupling.

9. The bearing (10) of claim 1, wherein a locking device (56) is removably positioned in the second aperture (27) and engages a portion of the shaft (36) for locking the anchor member (34) in a predetermined position.

10. The bearing (10) of claim 1, wherein the angular range of misalignment is at least 7 degrees from a central axis.

11. The bearing (10) of claim 2, wherein the angular range of misalignment is at least 7 degrees from a central axis.

12. The bearing (10) of claim 1, wherein the first convex surface (20), the first concave surface (16), the second convex surface (30) and the second concave surface (40) have a common radius (R) of curvature originating from a common point (P) of rotation.

13. The bearing (10) of claim 1, further comprising a cover (44) removably positioned on the outer member (12) proximate the second axial end (22) of the base portion (14), the head (38) being positioned between the cover (44) and the first convex surface (16).

14. The bearing (10) of claim 13, wherein the head (38) has a third convex outer surface (60) configured to maintain a clearance (G4) between the third convex surface (60) and an inward facing surface (44E) of the cover (44) when the anchor member (34) moves from a central position to a maximum angular displacement.

15. The bearing (10) of claim 1, wherein the inner member (28) and the outer member (12) are concentric with a central axis (A) and the inner member (28) and the outer member (12) are rotatable mounted with respect to one another about the central axis (A).

## Patentansprüche

1. Lager (10) für eine Schienenfahrzeugkupplung, wobei das Lager Folgendes umfasst:
ein äußeres Element (12) mit einem Basisteil (14) und einer ersten konkaven Oberfläche (16), die sich von einem ersten axialen Ende (18) des Basisteils (14) erstreckt, wobei das Basisteil (14) eine erste konvexe Oberfläche (20) aufweist, die sich von einem zweiten axialen Ende (22) des Basisteils (14) erstreckt, wobei das Basisteil (14) und die erste konkave Oberfläche (16) zusammenwirken, um in dem äußeren Element (12) einen Hohlraum (24) zu definieren, wobei sich durch das Basisteil (14) eine erste Öffnung (26) erstreckt;
ein inneres Element (28), das eine zweite konvexe Oberfläche (30) aufweist, wobei das innere Element (28) mindestens teilweise in dem Hohlraum (24) positioniert ist, sodass die zweite konvexe Oberfläche (30) verschiebbar in die erste konkave Oberfläche (16) eingreift, wobei sich durch das innere Element (28) eine zweite Öffnung (27) erstreckt; und
ein Ankerelement (34), definiert durch eine Welle (36) und einen Kopf (38), das sich von einem ersten Ende (36A) der Welle (36) radial nach außen erstreckt, wobei sich ein zweites Ende (36B) der Welle (36) durch die erste Öffnung (26) erstreckt und entfernbar in der zweiten Öffnung (27) gesichert ist, wobei der Kopf (38) eine zweite konkave Oberfläche (40) aufweist, die dem zweiten Ende (36B) der Welle (36) zugewandt ist, wobei die zweite konkave Oberfläche (40) verschiebbar ist die erste konvexe Oberfläche (20) eingreift, um eine axiale Bewegung des inneren Elements (28) relativ zu dem äußeren Element (12) einzuschränken,
**dadurch gekennzeichnet, dass**
das Basisteil (14) eine axial erste Anschlagsoberfläche (42) definiert, die sich zwischen der ersten konkaven Oberfläche (16) und der ersten Öffnung (27) erstreckt, zugewandt ist;
das innere Element (28) eine zweite Anschlagsoberfläche (28A) definiert, die sich zwischen der zweiten konvexen Oberfläche (30) und der zweiten Öffnung (27) erstreckt; und
die erste Anschlagsoberfläche (42) und die zweite Anschlagsoberfläche (28A) ineinander eingreifen, wenn ein Winkelverschiebungsbereich des inneren Elements (28) relativ zu dem äußeren Element (12) ein Maximum aufweist.

2. Lager (10) nach Anspruch 1, wobei:
der Kopf (38) eine periphere Kante (38E) aufweist;
das äußere Element (12) eine dritte Anschlagsoberfläche (44D) umfasst; und
die periphere Kante (38E) in die dritte Anschlagsoberfläche (44D) eingreift, wenn ein Winkelverschiebungsbereich des inneren Elements (28) relativ zu dem äußeren Element (12) ein Maximum aufweist.

3. Lager (10) nach Anspruch 1, wobei die Welle (36) mit einem vorbestimmten Drehmoment einstellbar in der zweiten Öffnung (27) gesichert ist.

4. Lager (10) nach Anspruch 1, wobei die Welle (36) in die zweite Öffnung (27) eingedreht ist.

5. Lager (10) nach Anspruch 1, das ferner eine glatten Ausguss (70, 72) umfasst, die sich mindestens erstreckt zwischen:
der zweiten konvexen Oberfläche (30) und der ersten konkaven Oberfläche (16); und
der ersten konvexen Oberfläche (20) und der zweiten konkaven Oberfläche (40).

6. Lager (10) nach Anspruch 1, das ferner eine Dichtung (55) umfasst, die sich zwischen dem äußeren Element (12) und dem inneren Element (28) erstreckt.

7. Lager (10) nach Anspruch 1, wobei das innere Element (28) eine Vielzahl von Gewindebohrungen (75) aufweist, die sich in eine axial nach außen gewandte Oberfläche (28X) davon erstrecken, um darin mit Gewinde versehene Befestigungsmittel (75F) zum Sichern des inneren Elements (28) an einem Teil einer Schienenfahrzeugkupplung aufzunehmen.

8. Lager (10) nach Anspruch 1, wobei das äußere Element (12) eine Vielzahl von Gewindebohrungen (76) aufweist, die sich in eine axial nach außen gewandte Oberfläche (12X) davon erstrecken, um darin mit Gewinde versehene Befestigungsmittel (76F) zum Sichern des äußeren Elements (12) an einem Teil einer Schienenfahrzeugkupplung aufzunehmen.

9. Lager (10) nach Anspruch 1, wobei eine Sperrvorrichtung (56) entfernbar in der zweiten Öffnung (27) positioniert ist und in einen Teil der Welle (36) eingreift, um das Ankerelement (34) in einer vorbestimmten Position zu sperren.

10. Lager (10) nach Anspruch 1, wobei der Winkelverschiebungsbereich mindestens 7 Grad von einer zentralen Achse beträgt.

11. Lager (10) nach Anspruch 2, wobei der Winkelverschiebungsbereich mindestens 7 Grad von einer zentralen Achse beträgt.

12. Lager (10) nach Anspruch 1, wobei die erste konvexe Oberfläche (20), die erste konkave Oberfläche (16), die zweite konvexe Oberfläche (30) und die zweite konkave Oberfläche (40) einen gemeinsamen Krümmungsradius (R) aufweisen, der seinen Ursprung in einem gemeinsamen Punkt (P) von Drehung hat.

13. Lager (10) nach Anspruch 1, das ferner eine Abdeckung (44) umfasst, die in der Nähe des zweiten axialen Endes (22) des Basisteils (14) entfernbar an dem äußeren Ende (12) positioniert ist, wobei der Kopf (38) zwischen der Abdeckung (44) und der ersten konvexen Oberfläche (16) positioniert ist.

14. Lager (10) nach Anspruch 13, wobei der Kopf (38) eine dritte konvexe äußere Oberfläche (60) aufweist, die dazu ausgelegt ist, ein Spiel (G4) zwischen der dritten konvexen Oberfläche (60) und einer nach innen gewandten Oberfläche (44E) der Abdeckung (44) aufrechtzuerhalten, wenn sich das Ankerelement (34) von einer zentralen Position zu einer maximalen Winkelverschiebung bewegt.

15. Lager (10) nach Anspruch 1, wobei das innere Element (28) und das äußere Element (12) konzentrisch zu einer zentralen Achse (A) verlaufen und das innere Element (28) und das äußere Element (12) in Bezug zueinander um die zentrale Achse (A) drehbar montiert sind.

## Revendications

1. Palier (10) pour un accouplement de wagon porte-rails, le palier comprenant :
un élément extérieur (12) présentant une partie base (14) et une première surface concave (16) s'étendant à partir d'une première extrémité axiale (18) de la partie base (14), la partie base (14) présentant une première surface convexe (20) s'étendant à partir d'une seconde extrémité axiale (22) de la partie base (14), la partie base (14) et la première surface concave (16) coopérant pour définir une cavité (24) dans l'élément extérieur (12), la partie base (14) présentant une première ouverture (26) s'étendant à travers celle-ci ;
un élément intérieur (28) présentant une deuxième surface convexe (30), l'élément intérieur (28) étant positionné au moins partiellement dans la cavité (24) de sorte que la deuxième surface convexe (30) vient en contant glissant avec la première surface concave (16), l'élément intérieur (28) présentant une seconde ouverture (27) s'étendant à travers celui-ci ; et
un élément d'ancrage (34) défini par un arbre (36) et une tête (38) s'étendant radialement vers l'extérieur à partir d'une première extrémité (36A) de l'arbre (36), une seconde extrémité (36B) de l'arbre (36) s'étendant à travers la première ouverture (26) et étant fixée de manière amovible dans la seconde ouverture (27), la tête (38) présentant une seconde surface concave (40) faisant face à la seconde extrémité (36B) de l'arbre (36), la seconde surface concave (40) venant en contact glissant avec la première surface convexe (20) pour restreindre un mouvement axial de l'élément intérieur (28) par rapport à l'élément extérieur (12), **caractérisé en ce que**
la partie base (14) définit une première surface de butée orientée de façon axiale (42) s'étendant entre la première surface concave (16) et la première ouverture (27) ;
l'élément intérieur (28) définit une deuxième surface de butée (28A) s'étendant entre la deuxième surface convexe (30) et la seconde ouverture (27) ; et
la première surface de butée (42) et la deuxième surface de butée (28A) viennent en prise l'une avec l'autre lorsqu'une plage de désalignement annulaire de l'élément intérieur (28) par rapport à l'élément extérieur (12) est à un maximum.

2. Palier (10) selon la revendication 1, dans lequel :
la tête (38) présente un bord périphérique (38E) ;
l'élément extérieur (12) comprend une troisième surface de butée (44D) ; et
le bord périphérique (38E) vient en prise avec la troisième surface de butée (44D) lorsqu'une plage de désalignement annulaire de l'élément intérieur (28) par rapport à l'élément extérieur (12) est à un maximum.

3. Palier (10) selon la revendication 1, dans lequel l'arbre (36) est fixé de manière réglable dans la seconde ouverture (27) à un couple prédéterminé.

4. Palier (10) selon la revendication 1, dans lequel l'arbre (36) est fileté dans la seconde ouverture (27).

5. Palier (10) selon la revendication 1, comprenant en outre un revêtement interne lubrifié (70, 72) disposé entre au moins l'une de :
la deuxième surface convexe (30) et la première surface concave (16) ; et
la première surface convexe (20) et la seconde surface concave (40).

6. Palier (10) selon la revendication 1, comprenant en outre un joint d'étanchéité (55) s'étendant entre l'élément extérieur (12) et l'élément intérieur (28).

7. Palier (10) selon la revendication 1, dans lequel l'élément intérieur (28) présente une pluralité de trous filetés (75) s'étendant dans une surface orientée de façon axiale vers l'extérieur (28X) de celle-ci pour recevoir des éléments de fixation filetés (75F) en son sein pour fixer l'élément intérieur (28) à une partie d'un accouplement de wagon porte-rails.

8. Palier (10) selon la revendication 1, dans lequel l'élément extérieur (12) comprend une pluralité de trous filetés (76) s'étendant dans une surface orientée de façon axiale vers l'extérieur (12X) de celle-ci pour recevoir des éléments de fixation filetés (76F) en son sein pour fixer l'élément extérieur (12) à une partie d'un accouplement de wagon porte-rails.

9. Palier (10) selon la revendication 1, dans lequel un dispositif de verrouillage (56) est positionné de manière amovible dans la seconde ouverture (27) et vient en prise avec une partie de l'arbre (36) pour verrouiller l'élément d'ancrage (34) dans une position prédéterminée.

10. Palier (10) selon la revendication 1, dans lequel la plage de désalignement annulaire est d'au moins 7 degrés par rapport à un axe central.

11. Palier (10) selon la revendication 2, dans lequel la plage de désalignement annulaire est d'au moins 7 degrés par rapport à un axe central.

12. Palier (10) selon la revendication 1, dans lequel la première surface convexe (20), la première surface concave (16), la deuxième surface convexe (30) et la seconde surface concave (40) présentent un rayon (R) de courbure commun ayant pour origine un point (P) de rotation commun.

13. Palier (10) selon la revendication 1, comprenant en outre un couvercle (44) positionné de manière amovible sur l'élément extérieur (12) à proximité de la seconde extrémité axiale (22) de la partie base (14), la tête (38) étant positionnée entre le couvercle (44) et la première surface convexe (16).

14. Palier (10) selon la revendication 13, dans lequel la tête (38) présente une troisième surface extérieure convexe (60) configurée pour maintenir un dégagement (G4) entre la troisième surface convexe (60) et une surface orientée vers l'intérieur (44E) du couvercle (44) lorsque l'élément d'ancrage (34) se déplace d'une position centrale à un déplacement angulaire maximal.

15. Palier (10) selon la revendication 1, dans lequel l'élément intérieur (28) et l'élément extérieur (12) sont concentriques avec un axe central (A) et l'élément intérieur (28) et l'élément extérieur (12) sont montés de façon rotative l'un par rapport à l'autre autour de l'axe central (A).
